# EUROPÄISCHE PATENTSCHRIFT

(11) **EP 4 221 941 B1**
(45) Veröffentlichungstag und Bekanntmachung des Hinweises auf die Patenterteilung: **19.02.2025**
(21) Anmeldenummer: 21769487.6
(22) Anmeldetag: 17.09.2021
(51) Int. Cl.: B25F 5/02, B25F 5/00

(54) **ELEKTRISCHE HANDWERKZEUGMASCHINE MIT AKKUSCHUTZ**
ELECTRIC HANDHELD MACHINE TOOL WITH BATTERY PROTECTION
MACHINE-OUTIL ÉLECTRIQUE À PROTECTION D'ACCUMULATEUR

(30) Priorität: 29.09.2020 EP 20198953
(43) Veröffentlichungstag der Anmeldung: 09.08.2023
(73) Patentinhaber: Hilti Aktiengesellschaft, 9494 Schaan (LI)
(72) Erfinder: DONAPUDI, Ganesh, 81241 München (DE)
(74) Vertreter: Hilti Aktiengesellschaft Corporate Intellectual Property
(86) Internationale Anmeldenummer: PCT/EP2021/075677
(87) Internationale Veröffentlichungsnummer: WO 2022/069261

(56) Entgegenhaltungen:
- EP-A1- 3 653 340
- DE-U1- 29 513 651
- US-A1- 2002 089 306
- US-A1- 2006 113 100
- US-A1- 2006 222 931
- US-A1- 2006 228 936
- US-A1- 2012 171 539
- US-A1- 2020 215 679

## Beschreibung

Die vorliegende Erfindung betrifft eine elektrische Handwerkzeugmaschine mit einem gehäuseintegrierten Handgriff durch den eine Griffachse verläuft. An einem Handgriffende des Handgriffs ist eine Aufnahmebucht zur Aufnahme eines Akkupacks angeordnet. Das Akkupack dient der Versorgung der elektrischen Handwerkzeugmaschine.

Elektrische Handwerkzeugmaschine eingangs genannter Art sind grundsätzlich aus dem Stand der Technik bekannt. Ebenfalls bekannt sind Akkuschutzvorrichtungen, beispielsweise elastisch ausgebildete Akkugehäuse oder Eckschutze für das Akkupack.

Einige Beispiele sind aus der US 2006/113100 A1, US 2020/215679 A1 oder US 2012/171539 A1 bekannt.

US 2006/228936 A1 offenbart den Oberbegriff des Anspruches 1.

Es ist Aufgabe der vorliegenden Erfindung eine elektrische Handwerkzeugmaschine anzugeben, die eine Grundlage für einen Akkuschutz bei vergleichsweise kompakten Abmaßen bzw. Ausmaßen der Handwerkzeugmaschine begünstigt.

Die Aufgabe wird dadurch gelöst, dass die Aufnahmebucht entlang der Griffachse beweglich im Handgriffende gelagert ist, und wobei die Handwerkzeugmaschine eine Druckfeder aufweist, die koaxial zur Führungshülse angeordnet ist.

Die Erfindung schließt die Erkenntnis ein, dass die vorbekannten Akkuschutzvorrichtungen typischerweise ein vergleichsweises größeres Volumen der Handwerkzeugmaschine, zumindest aber des Akkupacks bedingen. Somit sind solche Akkupacks zwar stoßsicher. Ein komfortables Arbeiten in kompakten Arbeitsräumen wird aber häufig erschwert. Dies wird bei der erfindungsgemäßen Handwerkzeugmaschine dadurch vermieden, dass zumindest ein Teil der Akkuschutzvorrichtung in das Handgriffende der Handwerkzeugmaschine verlagert wird.

Es hat sich als vorteilhaft herausgestellt, wenn die Handwerkzeugmaschine wenigstens ein Federelement und/oder wenigstens ein Dämpferelement aufweist, dass zwischen dem Handgriffende und der Aufnahmebucht wirkt.

In einer besonders bevorzugten Ausgestaltung weist die Aufnahmebucht eine Führungshülse auf. Es hat sich als vorteilhaft herausgestellt, wenn die Führungshülse zumindest abschnittsweise in einem im Handgriffende ausgebildeten Führungskanal angeordnet ist. In einer besonders bevorzugten Ausgestaltung ist rings um die Führungshülse eine Mehrzahl von Rippen angeordnet. In einer weiteren bevorzugten Ausgestaltung sind die Rippen in radialer Richtung nach außen und/oder nach innen elastisch auslenkbar ausgebildet. Es hat sich als vorteilhaft herausgestellt, wenn die Rippen, mit steigendem Abstand ausgehend von der Aufnahmebucht, in radialer Richtung nach außen geneigt sind. In einer weiteren bevorzugten Ausgestaltung verjüngt sich der Führungskanal entlang der Griffachse und in von der Aufnahmebucht angewandten Richtung. Dies vorzugsweise so, dass die Rippen, wenn sich Aufnahmebucht und Handgriffende einander nähern, in radialer Richtung elastisch nach innen verformt werden. Aufnahmebucht und Handgriffende nähern sich einander typischerweise bei einem Sturz der Handwerkzeugmaschine auf das Akkupack an. Die Verjüngung kann kuppelförmig oder abschnittsweise kuppelförmig ausgebildet sein. Vorzugsweise schließt sich die Verjüngung an einen im Wesentlichen zylinderförmigen Abschnitt des Führungskanals an. Es hat sich als vorteilhaft herausgestellt, wenn die Rippen einstückig mit der Aufnahmebucht ausgebildet sind. Alternativ können die Rippen als von der Aufnahmebucht verschiedene Komponenten bereitgestellt sein. In einer besonders bevorzugten Ausgestaltung bestehen die Rippen und/oder die Aufnahmebucht aus Kunststoff.

In einer weiteren bevorzugten Ausgestaltung weisen die Rippen jeweils einen Halterand auf, wobei der Halterand vorzugsweise eine Bewegung der Aufnahmebucht relativ zum Handgriffende begrenzt. Es hat sich als vorteilhaft herausgestellt, wenn der Halterand zusammen mit einer Auskragung des Führungskanals einen zumindest einseitigen Formschluss in Richtung der Griffachse bewirkt.

Erfindungsgemäß weist die Handwerkzeugmaschine eine Druckfeder auf. Es hat sich als vorteilhaft herausgestellt, wenn Druckfeder koaxial zur Führungshülse angeordnet ist. Es hat sich weiterhin als vorteilhaft herausgestellt, wenn die Druckfeder derart angeordnet ist, dass sie in entlang der Griffachse komprimiert wird, wenn sich Aufnahmebucht und Handgriffende - beispielsweise auf Grund eines Stoßes - einander nähern. Die Druckfeder kann mit dem wenigstens einen Federelement der Handwerkzeugmaschine identisch sein. Es hat sich als vorteilhaft herausgestellt, wenn sowohl die elastisch verformbaren Rippen als auch die Druckfeder an einer Sturzabfederung und/oder Sturzdämpfung beteiligt sind.

In einer besonders bevorzugten Ausgestaltung ist die Handwerkzeugmaschine ausgestattet mit einer elastisch verformbaren Dichtmanschette, die vorzugsweise entlang eines Übergangs zwischen Handgriffende und Aufnahmebucht angeordnet ist. Die Dichtmanschette kann gegen die Auskragung und/oder gegen die Aufnahmebucht abgestützt sein. Es hat sich als vorteilhaft herausgestellt, wenn die Dichtmanschette entlang der Griffachse als Dämpfer wirkt. Die Dichtmanschette kann mit dem wenigstens einen Dämpferelement der Handwerkzeugmaschine identisch sein.

In einer weiteren bevorzugten Ausgestaltung ist die elektrische Handwerkzeugmaschine als Bohrschrauber ausgebildet. Es hat sich als vorteilhaft herausgestellt, wenn die Handwerkzeugmaschine einen Akkupack aufweist, das in der Aufnahmebucht aufgenommen oder aufzunehmen ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes Ausführungsbeispiel einer elektrischen Handwerkzeugmaschine;
- Fig. 2: eine Schnittansicht durch eine Aufnahmebucht zur Aufnahme eines Akkupacks;
- Fig. 3: eine Aufnahmebucht in perspektivischer Darstellung; und
- Fig. 4: das Ausführungsbeispiel der Fig. 1 im Detail.

### Ausführungsbeispiele:

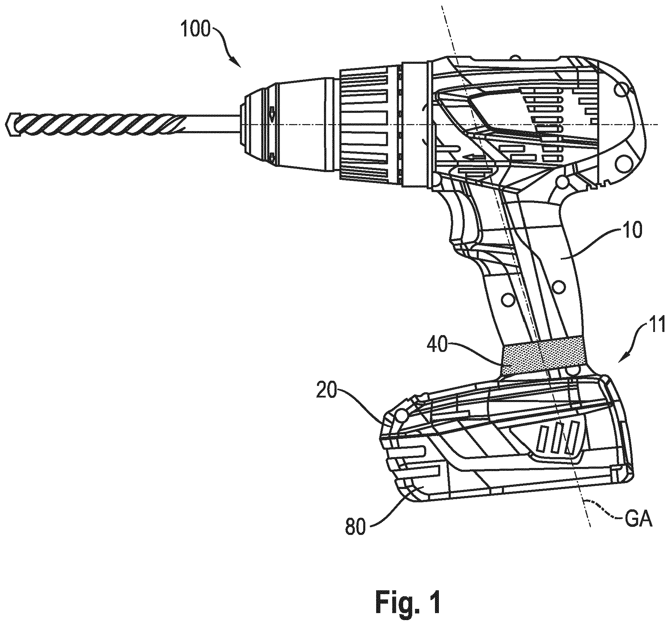

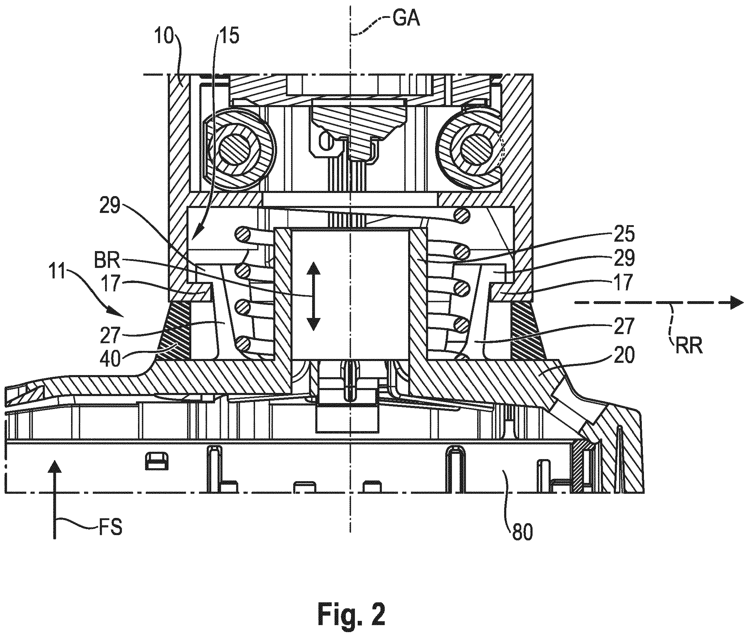

Ein bevorzugtes Ausführungsbeispiel einer elektrische Handwerkzeugmaschine 100 ist in Figur 1 dargestellt. Wie der Figur 1 entnommen werden kann, ist die Handwerkzeugmaschine 100 beispielhaft als Bohrschrauber ausgebildet. Die Handwerkzeugmaschine 100 ist ausgestattet mit einem gehäuseintegrierten Handgriff 10 durch den eine Griffachse GA verläuft. Im Betrieb wird der Handgriff 10 von einem Benutzer umgriffen um derart die Handwerkzeugmaschine 100, beispielsweise einhändig, zu halten. An einem Handgriffende 11 des Handgriffs 10 ist eine Aufnahmebucht 20 zur Aufnahme eines Akkupacks 80 angeordnet. Die Aufnahmebucht 20 ist erfindungsgemäß entlang der Griffachse GA beweglich im Handgriffende 11 gelagert. Dies ist durch den parallel zur Griffachse GA orientierten Doppelpfeil BR in Figur 2 angedeutet.

Die Aufnahmebucht 20 weist eine Führungshülse 25 auf (vgl. Figur 2), die zumindest abschnittsweise in einem im Handgriffende 11 ausgebildeten Führungskanal 15 angeordnet ist. Rings um die Führungshülse 25 ist eine Mehrzahl von Rippen 27 angeordnet (vgl. auch Figur 2), die in radialer Richtung RR nach außen und nach innen elastisch auslenkbar ausgebildet sind. Gut zu erkennen in Figur 2 ist, dass die Rippen 27, mit steigendem Abstand ausgehend von der Aufnahmebucht 20 (in Figur 2 nach oben) in radialer Richtung RR nach außen geneigt sind. Mit anderen Worten ist ein Umfang der Rippen 27 ist am Übergang zur Akkuaufnahme 20 geringer als am freien Ende der Rippen 27. Um die Aufnahmebucht 20 am Handgriffende 11 zu montieren, werden die Rippen 27 von Hand oder maschinell in radialer Richtung RR nach innen gedrückt und den Führungskanal 15 eingeschoben. Die Rippen 27 weisen jeweils einen Halterand 29 auf. Der Halterand 29 begrenzt eine Bewegung der Aufnahmebucht 20 relativ zum Handgriffende 11. Genauer gesagt bewirkt der Halterand 29 zusammen mit einer Auskragung 17 des Führungskanals 15 einen einseitigen Formschluss in Griffachse GA nach unten. Mit anderen Worten kann der Aufnahmebucht 20 in Figur 2 nicht nach unten aus dem Handgriffende 11 herausfallen.

Wie der Figur 2 ebenfalls entnommen werden kann, weist die Handwerkzeugmaschine 100 eine Druckfeder 30 auf, die koaxial zur Führungshülse 25 angeordnet ist. Über diese Druckfeder 30 kann eine Stoßkraft FS auf das in der Aufnahmebucht 20 angeordnete Akkupack 80 abgefedert werden. Dabei taucht die Führungshülse 25 in Richtung der Griffachse GA nach oben weiter in den Führungskanal 15. Ein Ausschwingen der Druckfeder 30 nach unten wird durch den bereits beschriebenen Formschluss zwischen dem Halterand 29 der Rippen 27 und der Auskragung 17 des Führungskanals 15 realisiert.

Die Handwerkzeugmaschine 100 weist ebenfalls eine elastisch verformbare Dichtmanschette 40 auf, die entlang eines Übergangs zwischen Handgriffende 11 und Aufnahmebucht 20 angeordnet ist. Dabei umschließt die Dichtmanschette 40 das Handgriffende 11, so dass weder Schmutz noch Feuchtigkeit in den Führungskanal 15 eintreten kann. Die Dichtmanschette 40 ist gegen die Auskragung 17 und die Aufnahmebucht 20 abgestützt. Die Dichtmanschette 40 besteht beispielhaft aus einem Elastomer, so dass die Dichtmanschette 40 entlang der Griffachse GA als Dämpfer wirkt. Mit anderen Worten wird die Dichtmanschette 40 bei einem Stoß auf das Akkupack 80 von unten komprimiert.

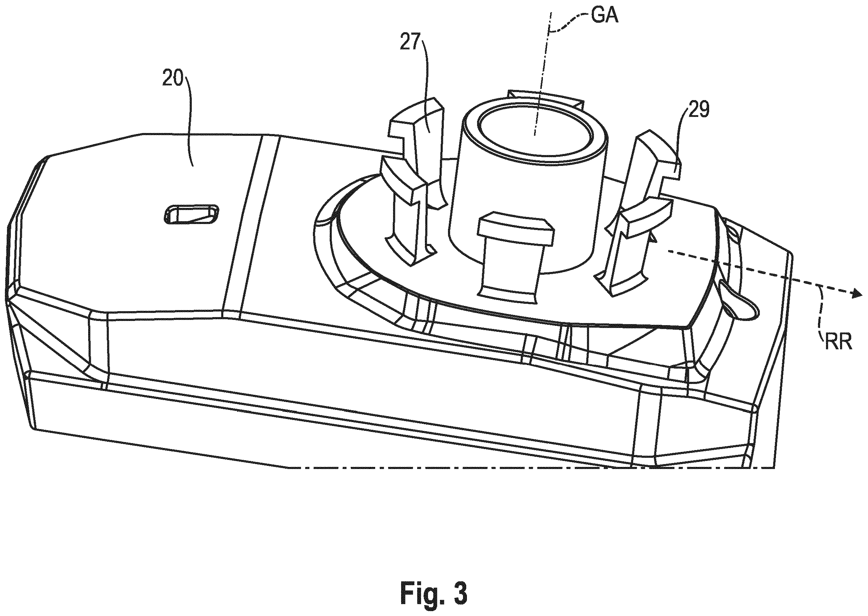

Eine Aufnahmebucht 20 in perspektivischer Darstellung ist in Figur 3 dargestellt. Gut zu erkennen ist die von der Aufnahmebucht 20 abragende Führungshülse 25, die von sechs Rippen 27 umgeben ist. Die Rippen 27 sind gleichmäßig voneinander beabstandet um die Führungshülse 25 herum angeordnet. Dabei sind die Rippen 27 in radialer Richtung RR nach außen innen elastisch auslenkbar ausgebildet und in radialer Richtung RR nach außen geneigt. Im vorliegend dargestellten Ausführungsbeispiel sind die Rippen 27 einstückig mit der Aufnahmebucht ausgebildet und bestehen aus Kunststoff.

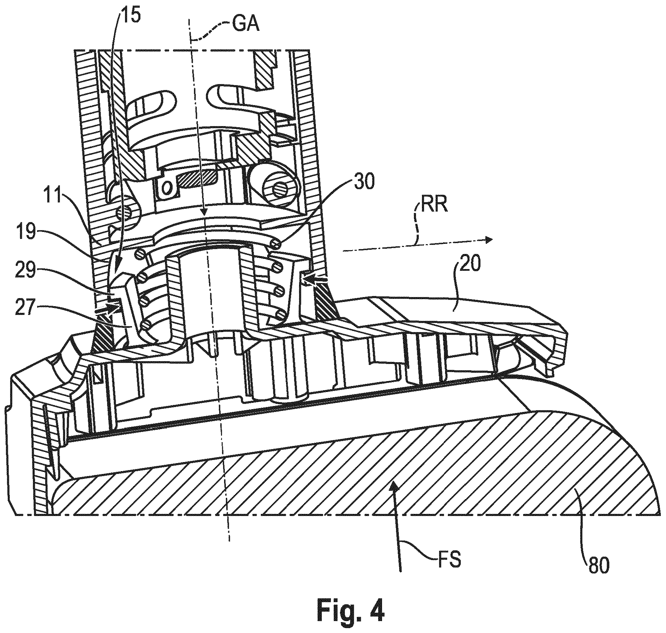

Die Federwirkung der Rippen 27 wird nun mit Bezug auf Figur 4 weiter erläutert. Figur 4 ist eine Detaildarstellung der Figur 1. Der im Handgriffende 11 ausgebildete im Wesentlichen zylinderförmige Führungskanal 15 weist in Richtung der Griffachse GA (gemeint ist die von der Aufnahmebucht 20 angewandten Richtung nach oben) eine Verjüngung 19 auf an der ein jeweiliger Halterand 29 der Rippen 27 entlang gleiten kann. Auf Grund dieser Verjüngung 19 werden die Rippen 27 in radialer Richtung RR nach innen hin zur Griffachse GA elastisch verformt, wenn sich die Aufnahmebucht 20 auf Grund einer auf das Akkupack 80 aufgebrachten Stoßkraft FS dem Handgriffende 11 nähert. Durch die elastische Verformung der Rippen 27 nach innen wird ein Teil der Stoßkraft FS abgefedert. Ein weiterer Teil der Stoßkraft wird durch die Druckfeder 30 abgefedert. Die Federwirkungen der Rippen 27 und der Druckfeder 30 wirken kooperativ.

### Bezugszeichenliste

- 10: Handgriff
- 11: Handgriffende
- 15: Führungskanal
- 17: Auskragung
- 19: Verjüngung
- 20: Aufnahmebucht
- 25: Führungshülse
- 27: Rippen
- 29: Halterand
- 30: Druckfeder
- 40: Dichtmanschette

- 80: Akkupack
- 90: Gehäuse
- 100: Elektrische Handwerkzeugmaschine

- BR: Bewegungsrichtung der Aufnahmebucht relativ zum Handgriff
- GA: Griffachse
- RA: Rotationsachse
- RR: radiale Richtung

## Patentansprüche

1. Elektrische Handwerkzeugmaschine (100) mit einem gehäuseintegrierten Handgriff (10) durch den eine Griffachse (GA) verläuft und an dessen Handgriffende (11) eine Aufnahmebucht (20) zur Aufnahme eines Akkupacks (80) angeordnet ist,
**dadurch gekennzeichnet, dass** die Aufnahmebucht (20) entlang der Griffachse (GA) beweglich im Handgriffende (11) gelagert ist, und die Aufnahmebucht (20) eine Führungshülse (25) aufweist, wobei die Handwerkzeugmaschine (100) eine Druckfeder (30) aufweist, die koaxial zur Führungshülse (25) angeordnet ist.

2. Elektrische Handwerkzeugmaschine (100) nach Anspruch 1,
**dadurch gekennzeichnet, dass** die Handwerkzeugmaschine (100) wenigstens ein Federelement und/oder wenigstens ein Dämpferelement aufweist, dass die Druckfeder (30) zwischen dem Handgriffende (11) und der Aufnahmebucht (20) wirkt.

3. Elektrische Handwerkzeugmaschine (100) nach Anspruch 1 oder 2,
**dadurch gekennzeichnet, dass** die Aufnahmebucht (20) eine Führungshülse (25) aufweist, die zumindest abschnittsweise in einem im Handgriffende (11) ausgebildeten Führungskanal (15) angeordnet ist.

4. Elektrische Handwerkzeugmaschine (100) nach Anspruch 3,
**dadurch gekennzeichnet, dass** rings um die Führungshülse (25) eine Mehrzahl von Rippen (27) angeordnet ist, die in radialer Richtung (RR) nach außen und/oder nach innen elastisch auslenkbar ausgebildet sind.

5. Elektrische Handwerkzeugmaschine (100) nach Anspruch 4,
**dadurch gekennzeichnet, dass** die Rippen (27), mit steigendem Abstand ausgehend von der Aufnahmebucht (20), in radialer Richtung (RR) nach außen geneigt sind.

6. Elektrische Handwerkzeugmaschine (100) nach Anspruch 4 oder 5,
**dadurch gekennzeichnet, dass** sich der Führungskanal (15) entlang der Griffachse (GA) und in von der Aufnahmebucht (20) angewandten Richtung verjüngt, so dass die Rippen (27), wenn sich Aufnahmebucht (20) und Handgriffende (11) einander nähern, in radialer Richtung (RR) elastisch nach innen verformt werden.

7. Elektrische Handwerkzeugmaschine (100) nach einem der Ansprüche 4 bis 6,
**dadurch gekennzeichnet, dass** die Rippen (27) jeweils einen Halterand (29) aufweisen, wobei der Halterand (29) eine Bewegung der Aufnahmebucht (20) relativ zum Handgriffende (11) begrenzt.

8. Elektrische Handwerkzeugmaschine (100) nach einem der vorangehenden Ansprüche,
**dadurch gekennzeichnet, dass** die Handwerkzeugmaschine (100) eine elastisch verformbare Dichtmanschette (40) aufweist, die entlang eines Übergangs zwischen Handgriffende (11) und Aufnahmebucht (20) angeordnet ist.

9. Elektrische Handwerkzeugmaschine (100) nach Anspruch 8,
**dadurch gekennzeichnet, dass** die Dichtmanschette (40) entlang der Griffachse (GA) als Dämpfer wirkt.

10. Elektrische Handwerkzeugmaschine (100) nach einem der vorangehenden Ansprüche,
**dadurch gekennzeichnet, dass** die elektrische Handwerkzeugmaschine (100) als Bohrschrauber ausgebildet ist.

## Claims

1. Electric hand-held power tool (100) having a housing-integrated handle (10) through which a handle axis (GA) extends and on the handle end (11) of which there is arranged a receiving bay (20) for receiving a rechargeable-battery pack (80),
**characterized in that** the receiving bay (20) is mounted in the handle end (11) so as to be movable along the handle axis (GA), and the receiving bay (20) has a guide sleeve (25), wherein the hand-held power tool (100) has a compression spring (30) which is arranged coaxially in relation to the guide sleeve (25).

2. Electric hand-held power tool (100) according to Claim 1,
**characterized in that** the hand-held power tool (100) has at least one spring element and/or at least one damper element, and **in that** the compression spring (30) acts between the handle end (11) and the receiving bay (20).

3. Electric hand-held power tool (100) according to Claim 1 or 2,
**characterized in that** the receiving bay (20) has a guide sleeve (25) which is arranged at least sectionally in a guide channel (15) formed in the handle end (11).

4. Electric hand-held power tool (100) according to Claim 3,
**characterized in that**, all around the guide sleeve (25), there is arranged a plurality of ribs (27) which are designed to be elastically deflectable outwardly and/or inwardly in a radial direction (RR).

5. Electric hand-held power tool (100) according to Claim 4,
**characterized in that** the ribs (27), with increasing distance from the receiving bay (20), are inclined outwardly in the radial direction (RR).

6. Electric hand-held power tool (100) according to Claim 4 or 5,
**characterized in that** the guide channel (15) narrows along the handle axis (GA) and in a direction facing away from the receiving bay (20), so that, if the receiving bay (20) and the handle end (11) approach one another, the ribs (27) are deformed elastically inwardly in the radial direction (RR).

7. Electric hand-held power tool (100) according to one of Claims 4 to 6,
**characterized in that** the ribs (27) each have a retaining edge (29), wherein the retaining edge (29) limits a movement of the receiving bay (20) relative to the handle end (11).

8. Electric hand-held power tool (100) according to one of the preceding claims,
**characterized in that** the hand-held power tool (100) has an elastically deformable sealing sleeve (40) which is arranged along a transition between the handle end (11) and the receiving bay (20).

9. Electric hand-held power tool (100) according to Claim 8,
**characterized in that** the sealing sleeve (40) acts as a damper along the handle axis (GA).

10. Electric hand-held power tool (100) according to one of the preceding claims,
**characterized in that** the electric hand-held power tool (100) is designed as a drill driver.

## Revendications

1. Machine-outil à main électrique (100), comprenant une poignée (10) intégrée dans le boîtier, à travers laquelle s'étend un axe de poignée (GA) et à l'extrémité de poignée (11) de laquelle est disposé un logement de réception (20) pour recevoir un bloc d'accumulateur (80),
**caractérisée en ce que** le logement de réception (20) est monté mobile le long de l'axe de poignée (GA) dans l'extrémité de poignée (11), et le logement de réception (20) présente une douille de guidage (25), la machine-outil à main (100) présentant un ressort de compression (30) qui est disposé coaxialement à la douille de guidage (25).

2. Machine-outil à main électrique (100) selon la revendication 1,
**caractérisée en ce que** la machine-outil à main (100) présente au moins un élément de ressort et/ou au moins un élément amortisseur, **en ce que** le ressort de compression (30) agit entre l'extrémité de poignée (11) et le logement de réception (20).

3. Machine-outil à main électrique (100) selon la revendication 1 ou 2,
**caractérisée en ce que** le logement de réception (20) présente une douille de guidage (25) qui est disposée au moins par endroits dans un canal de guidage (15) réalisé dans l'extrémité de poignée (11).

4. Machine-outil à main électrique (100) selon la revendication 3,
**caractérisée en ce que** tout autour de la douille de guidage (25) est disposée une pluralité de nervures (27) qui sont réalisées de manière à pouvoir être écartées de manière élastique vers l'extérieur et/ou vers l'intérieur dans la direction radiale (RR).

5. Machine-outil à main électrique (100) selon la revendication 4,
**caractérisée en ce qu'**avec une distance croissante, les nervures (27) sont inclinées vers l'extérieur dans la direction radiale (RR) en partant du logement de réception (20).

6. Machine-outil à main électrique (100) selon la revendication 4 ou 5,
**caractérisée en ce que** le canal de guidage (15) s'amincit le long de l'axe de poignée (GA) et dans la direction détournée du logement de réception (20) de sorte que lorsque le logement de réception (20) et l'extrémité de poignée (11) se rapprochent, les nervures (27) se déforment élastiquement vers l'intérieur dans la direction radiale (RR).

7. Machine-outil à main électrique (100) selon l'une quelconque des revendications 4 à 6,
**caractérisée en ce que** les nervures (27) présentent respectivement un bord de retenue (29), le bord de retenue (29) limitant un mouvement du logement de réception (20) par rapport à l'extrémité de poignée (11).

8. Machine-outil à main électrique (100) selon l'une quelconque des revendications précédentes,
**caractérisée en ce que** la machine-outil à main (100) présente une garniture d'étanchéité (40) à déformation élastique qui est disposée le long d'une transition entre l'extrémité de poignée (11) et le logement de réception (20).

9. Machine-outil à main électrique (100) selon la revendication 8,
**caractérisée en ce que** la garniture d'étanchéité (40) agit comme un amortisseur le long de l'axe de poignée (GA).

10. Machine-outil à main électrique (100) selon l'une quelconque des revendications précédentes,
**caractérisée en ce que** la machine-outil à main électrique (100) est réalisée comme une perceuse-visseuse.
